# EUROPÄISCHE PATENTANMELDUNG

(11) **EP 1 975 821 A2**
(43) Veröffentlichungstag der Anmeldung: **01.10.2008**
(21) Anmeldenummer: 08102925.8
(22) Anmeldetag: 26.03.2008
(51) Int. Cl.: G06F 17/30

(54) **Verfahren zur digitalen Speicherung von Daten auf einem Datenspeicher mit beschränktem verfügbarem Speicherplatz**

(30) Priorität: 30.03.2007 DE 102007015535; 30.03.2007 US 921097 P
(71) Anmelder: SIEMENS AKTIENGESELLSCHAFT, 80333 München (DE)
(72) Erfinder: Heintel, Markus, 81375, München (DE); Hiob, Christian, 85614, Eglharting (DE)

(57) **Zusammenfassung**

Die wichtigsten Daten auf einem ersten Speicher eines Datenverarbeitungssystem (DVS) werden bei der Übertragung auf einen begrenzten zweiten Datenspeicher (PSM) bevorzugt gespeichert. Dabei wird die Grenzziehung zwischen wichtigen und noch speicherbaren Daten einerseits und weniger wichtigen und deshalb nicht mehr speicherbaren Daten andererseits vom verfügbaren Speichervolumen des Zieldatenspeichers abhängig gemacht. Auf diese Weise wird erreicht, dass möglichst viele der wichtigsten Daten auf dem Zieldatenspeicher gespeichert werden können.

## Beschreibung

Die Erfindung betrifft ein Verfahren zur digitalen Speicherung von in mindestens einem ersten Datenspeicher eines Datenverarbeitungssystems vorhandenen Daten auf einem zweiten Datenspeicher mit beschränktem verfügbarem Speicherplatz.

Obwohl durch die schnell fortschreitende technische Entwicklung der Speichermedientechnologien die Größe der verfügbaren Speichervolumina moderner Datenspeicher noch immer weiter ansteigt, bleibt die Begrenzung des verfügbaren Speicherplatzes bei vielen Anwendungen der Informationstechnik eine Herausforderung für die Entwickler von Verfahren und Anwendungen der Informationstechnik. Dies hat seinen Grund zum einen in der ständig steigenden Datenflut, d.h. in der bei modernen Anwendungen (Multimedia, Medizintechnik, etc.) ständig steigenden Größe der Dateien, die oft durch die ebenfalls steigende Prozessorleistung oder verbesserte Aufnahmeverfahren mit höherer Auflösung verursacht wird. Zum anderen wächst die Bedeutung portabler Speichermedien, deren verfügbares Speichervolumen in erster Linie durch Anforderungen an ihre Größe, ihr Gewicht und an ihre Produktionskosten begrenzt wird.

Wichtige Beispiele sind Speicherkarten oder auch Chipkarten mit oder ohne eigenen Prozessor, die heute bei Multimedia-Anwendungen oder beispielsweise in der Medizin-Telematik in Form von sogenannten Patientenkarten ("elektronische Gesundheitskarte") oder in ähnlicher Form Anwendung finden. Die Speichervolumina solcher Speichermedien sind wegen ihrer Portabilität oder aus Kostengründen begrenzt und normalerweise nicht nachträglich erweiterbar. Gerade bei Anwendungen in der Medizin-Telematik ist damit zu rechnen, dass auf solchen portablen Speichermedien künftig zahlreiche Daten (Patientendaten, Befunde, Verordnungen, Bilddaten, etc.) gespeichert werden sollen, deren Gesamtvolumen schnell das verfügbare Speichervolumen überschreiten könnte.

Aber auch außerhalb der Medizin-Telematik oder der Anwendungen mit portablen Speichermedien treten immer wieder Situationen auf, in denen begrenzte verfügbare Speichervolumina eine Herausforderung darstellen, beispielsweise bei der Sicherung oder Archivierung von Multimedia-Dateien auf Netzwerk-Servern, DVD, etc. Diese Liste ließe sich leicht noch erweitern.

Der Erfindung liegt daher die Aufgabe zugrunde, die Möglichkeiten der Informationstechnik, mit diesen Problemen umzugehen, zu verbessern. Diese Aufgabe wird durch ein Verfahren nach Anspruch 1 gelöst. Vorteilhafte Weiterbildungen der Erfindung sind Gegenstände von Unteransprüchen.

Im Folgenden wir die Erfindung anhand bevorzugter Ausführungsbeispiele und mit Hilfe von Figuren näher beschrieben.

Figur 1 zeigt in schematischer Weise die zu lösende Aufgabe anhand einer typischen Anwendungssituation.

Figur 2 zeigt in schematischer Weise den Ablauf des erfindungsgemäßen Verfahrens anhand eines bevorzugten Ausführungsbeispiels.

Figur 3 zeigt in schematischer Weise die Unterteilung der zu speichernden Datenmenge M in eine erste Datenmenge (MH) und eine zweite Datenenge (ML) durch eine Suche, die der Prozessor (P) unterstützt.

Das erfindungsgemäße Verfahren macht sich die Beobachtung zunutze, dass in vielen Anwendungsfällen die Menge der zu speichernden Daten (dat) in Teildatenmengen (M1,...,MN) unterteilt werden kann oder bereits aufgrund der Anwendung unterteilt ist, und dass sich in vielen Fällen die Daten in diesen Teildatenmengen in ihrer Wichtigkeit oder Bedeutung für die jeweilige Anwendung oder für den jeweiligen Anwender unterscheiden. Hier sieht die Erfindung nun vor, die wichtigsten dieser Daten bevorzugt zu speichern und dabei die Grenzziehung zwischen wichtigen und noch speicherbaren Daten einerseits und weniger wichtigen und deshalb nicht mehr speicherbaren Daten andererseits vom verfügbaren Speichervolumen (SV) des Zieldatenspeichers (PSM) abhängig zu machen. Auf diese Weise wird erreicht, dass möglichst viele der wichtigsten Daten auf dem Zieldatenspeicher (PSM) gespeichert werden können.

Die Kriterien zur Beurteilung der Wichtigkeit - und damit die Methode zur Priorisierung der Teilmengen - werden dabei von der jeweiligen Anwendung bestimmt. An dem bereits erwähnten Beispiel der Patientenkarte wird dies leicht sichtbar, wenn man beispielsweise annimmt, dass auf einer solchen Karte neben den Personendaten eines Patienten (wie z.B. Name, Versicherungsnummer, etc.) im Anschluss an eine Reihe von Untersuchungen in einem Krankenhaus bei der Entlassung des Patienten die dabei erhobenen Befunde (z.B. Audiogramme, EKGs, etc.), Laborergebnisse (Blutanalysen verschiedenen Datums), digitale Röntgenbilder, Arztbriefe, Rezepte, etc. gespeichert werden sollen. Es mag einleuchten, dass aus Sicht der behandelten Ärzte in einigen Fällen die Speicherung von jüngeren Untersuchungsergebnissen wichtiger sein wird als die von älteren, oder dass ein elektronisches Rezept in einigen Fällen wichtiger sein kann als die Speicherung von EKGs. Im konkreten Anwendungsfall wird dies der behandelnde Arzt jedoch individuell entscheiden wollen und dies z.B. mit Hilfe eines entsprechenden Menüs in seiner Anwendungssoftware festlegen.

Dabei könnten z.B. den zu speichernden Datensätzen, Dateien oder (allgemeiner) Teildatenmengen der Menge von Daten (natürliche oder rationale) Wertzahlen zugewiesen werden, so dass über die Ordnungsrelation der natürlichen oder rationalen Zahlen eine Ordnung oder wenigstens Halbordnung der zu speichernden Teilmengen induziert würde. Bei der Halbordnung gäbe es Teilmengen mit gleicher Priorität und deshalb mit gleicher Wertzahl. Solche Wertzahlen könnten vom behandelnden Arzt, aber auch vom Datenverarbeitungssystem der Anwendung automatisch anhand bestimmter Richtlinien vergeben werden.

Eine andere Möglichkeit wäre, dass der behandelnde Arzt die Teildatenmengen (Datensätze, Dateien, etc.) mit Hilfe einer entsprechend gestalteten Benutzeroberfläche seiner Anwendungssoftware interaktiv oder manuell in eine Reihenfolge bringt, indem er beispielsweise in einer ihm am Bildschirm angezeigten Liste der zu ordnenden Teilmengen, die einzelnen Listenobjekte beispielsweise mit der Maus verschiebt, oder nach Markierung eines Listenobjekts einen Schaltknopf ("Button") betätigt, der das Listenobjekt innerhalb der Liste nach "oben" oder "unten" verschiebt. Es ist anhand dieser Beschreibung klar, dass sich viele ähnliche Ausführungsmöglicheiten ergeben.

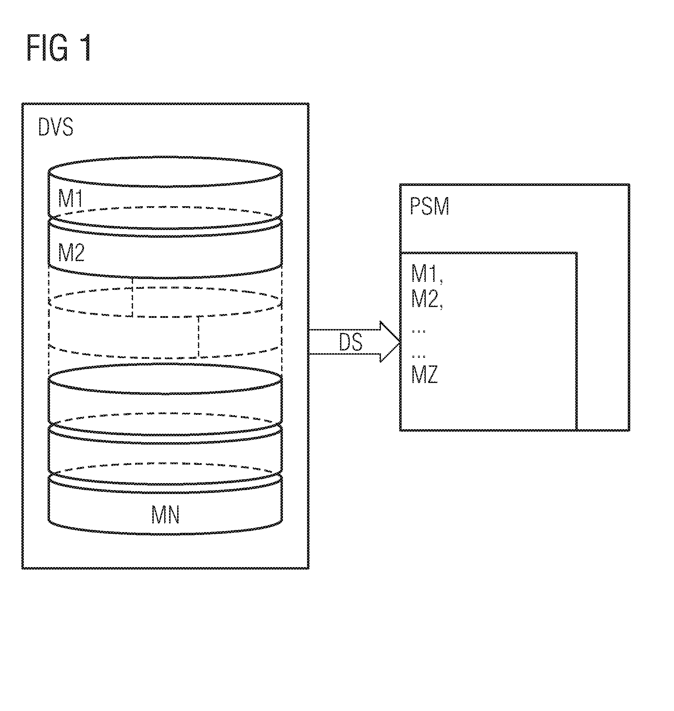

In ähnlicher Weise kann auch eine Separation eines Datensatzes oder einer Datei in Teildatensätze oder Dateien vorgenommen werden, beispielsweise wenn eine Datei mehrere Röntgenaufnahmen enthält, oder wenn eine Datei eine Blutanalyse mit Datensätzen zu verschiedenen Blutwerten unterschiedlicher Relevanz für den Anwendungsfall enthält. Je nach der Dateistruktur der zu separierenden Daten, kann dazu beispielsweise ein Texteditor oder ein spezielles Menü der verwendeten Anwendungssoftware, die möglicherweise einen integrierten Bildanzeiger ("Imageviewer", "Previewer" für sogenannte "Thumbnails", "Icons", etc.) besitzt, verwendet werden. Figur 1 zeigt in schematischer Weise das Datenverarbeitungssystem DVS mit den auf ihm vorhandenen Teildatenmengen M1,...,MN.

Liegt die Menge M der zu speichernden Daten erst einmal in Form einer geordneten oder wenigstens halbgeordneten Menge von Teildatenmengen (M1,...,MN) vor, dann wird zur Ermittlung der größtmöglichen Anzahl Z von Teilmengen (M1,...,MZ), die auf dem verfügbaren Speicherplatz (SV) des zweiten Datenspeichers (PSM) gespeichert werden können, eine Suche angestoßen, die von einem Prozessor P des Datenverarbeitungssystems DVS ausgeführt wird, und in deren Verlauf die zu speichernde Menge (M) von Daten (dat) bei jedem Suchschritt jeweils in eine erste Menge (MH) und in eine zweite Menge (ML) unterteilt wird, für die gilt, dass die Priorität keiner Teildatenmenge (Mk) in der ersten Menge (MH) kleiner ist als die Priorität einer beliebigen Teildatenmenge (Mj) in der zweiten Menge (ML).

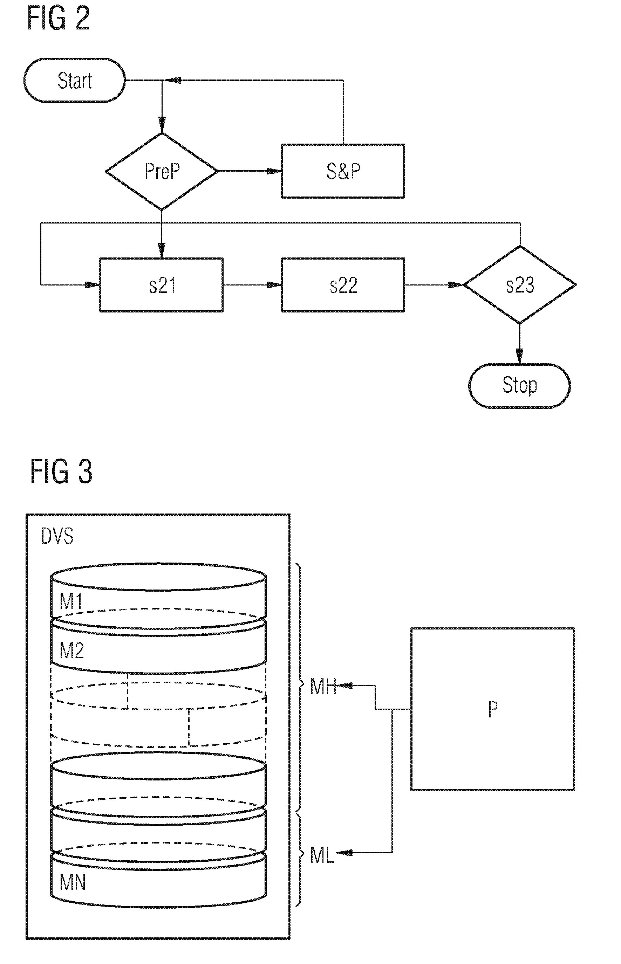

In Figur 2 ist ein mögliches Ausführungsbeispiel dieser Suche schematisch dargestellt. Nach Ablauf der Vorverarbeitung (PreP, S&P), bei der die Teildatenmengen - falls erforderlich - durch Unterteilung der zu speichernden Menge M von Daten erzeugt und anschließend - falls erforderlich - nach ihrer Priorität geordnet werden, findet das eigentlich Suchverfahren statt. In dem in Figur 2 dargestellten Beispiel ist nicht nur die eigentliche Suche, sondern auch die Vorverarbeitung als Programmschleife ausgeführt. In der Vorverarbeitung wird zu Beginn (Start) und nach jedem Vorverarbeitungsschritt (S&P) geprüft, ob die Vorverarbeitung beendet ist, weil die zu speichernde Datenmenge M (bereits) in Form einer geordneten oder wenigstens halbgeordneten Menge von Teildatenmengen (M1,...,MN) vorliegt. Die Vorverarbeitungsschritte (S&P) bestehen dabei aus dem Unterteilen (Separation) und dem Ordnen (Priorisierung).

Der Vorverarbeitung schließt sich die eigentliche Suche an, die wiederum die Form einer Programmschleife hat, die wenigstens aus den Programmschritten
- der Teilung (s21) der Menge M in die erste Menge MH und die zweite Menge ML und
- der Prüfung (s23) des Speicherplatzbedarfs (VMH) der ersten Menge MH
besteht. Bei einigen Ausführungsformen der Erfindung können noch weitere Schritte (s22), wie z.B. eine Datenkompression, hinzukommen. Ist die größtmögliche erste Menge MH gefunden, dann wird die Suchschleife verlassen (STOP).

Während dieser Suche wird also mit Hilfe einer bei jedem Schritt durchzuführenden Prüfung des jeweiligen Speicherplatzbedarfs (VMH) der jeweiligen ersten Menge (MH) geprüft, ob der jeweilige Speicherplatzbedarfs (VMH) der jeweiligen ersten Menge (MH) kleiner oder gleich dem verfügbaren Speicherplatz (SV) auf dem Zieldatenspeicher (PSM) ist. Als Ergebnis der Suche wird die größtmögliche erste Menge (MH) ermittelt, für die diese Bedingung erfüllt ist. Da alle diese ersten Mengen (MH) aus einer Anzahl von Teildatenmengen (M1,...,MT) bestehen, wird als Ergebnis der Suche also das Maximum Z aller dabei auftretenden Zahlen T ermittelt.

Folglich wird durch die Suche die Aufgabe gelöst, die größtmögliche Anzahl Z von Teilmengen (M1,..., MZ) zu ermitteln, die auf dem verfügbaren Speicherplatz (SV) des zweiten Datenspeichers (PSM) gespeichert werden können. Da die Menge M in Form einer geordneten oder wenigstens halbgeordneten Menge von Teildatenmengen (M1,...,MN) vorlag, sind diese so ermittelten Z Teildatenmengen (M1,...,MZ) die "wichtigsten" Teildatenmengen in dem Sinn, dass die Priorität keiner auf diese Weise speicherbaren Teildatenmenge geringer ist als die Priorität einer beliebigen auf diese Weise nicht mehr speicherbaren Teildatenmenge.

Gemäß einer besonders vorteilhaften Ausführungsform des erfindungsgemäßen Verfahren ist vorgesehen, dass bei jedem Schritt der Suche vor der jeweiligen Prüfung des Speicherplatzbedarfs (VMH) zumindest ein Teil der Daten in der jeweiligen ersten Menge (MH) mit Hilfe eines Datenkompressionsverfahrens komprimiert werden, so dass der Speicherplatzbedarf der jeweils komprimierten Daten geprüft wird, und bei dem die auf diese Weise ermittelten Z Teildatenmengen (M1,...,MZ) schließlich in komprimierter Form auf das zweite Datenspeicher übertragen und so auf diesem gespeichert werden.

Diese Maßnahme ist zwar, je nach eingesetztem Datenkompressionsverfahren und in Abhängigkeit von der Art der Daten, die komprimiert werden, sowie in Abhängigkeit vom angestrebten Kompressionsgrad mit einem mehr oder weniger bedeutsamen Geschwindigkeitsverlust des erfindungsgemäßen Verfahrens verbunden, der jedoch in vielen Fällen durch die damit erzielbare Erhöhung der Anzahl Z der auf dem Zieldatenträger speicherbaren Teildatenmengen wettgemacht wird. Hierbei ist zu berücksichtigen, dass in vielen Anwendungen, wie beispielsweise bei der Archivierung von Multimediadaten oder bei der Speicherung von Patientendaten und Untersuchungsdaten auf Patientenkarten die hierfür erforderliche Zeit nicht in erster Linie von Bedeutung ist.

Das dabei verwendete Datenkompressionsverfahren kann - muss aber nicht - für jede Teildatenmenge in der jeweils ersten Menge MH dasselbe Kompressionsverfahren sein. Wenn die in einem Suchschritt betrachtete erste Menge MH beispielsweise sowohl Textdaten als auf Bilddaten enthält, dann ergeben sich deutliche Vorteile, wenn für die Kompression der Bilddaten ein hierfür speziell entwickeltes Bilddatenkompressionsverfahren (z.B. JPEG, MPEG, etc.) eingesetzt wird. Ob die Textdaten überhaupt komprimiert werden, kann von ihrem Redundanzgrad abhängig gemacht werden.

Einige Textdaten, die, wie beispielsweise Blutanalyseprotokolle, viele Abkürzungen und nur sehr wenige natürlichsprachliche Begriffe enthalten, werden häufig nicht mit einem bedeutenden Kompressionsfaktor komprimierbar sein. Andere Textdaten, wie z.B. Arztbriefe enthalten normalerweise erhebliche Redundanzen, die mit Hilfe von hierfür entwickelten Standardkompressionsverfahren (z.B. Huffman, LZW, etc.) leicht eliminiert werden können. Die einschlägige Literatur gibt dem fachmännischen Leser dieser Beschreibung zahlreiche Möglichkeiten zur Optimierung an die Hand.

Anstelle einzelne Teildatenmengen in der ersten Menge MH wegen ihrer unterschiedlichen Redundanzstrukturen mit unterschiedlichen, jeweils angepassten Kompressionsverfahren zu behandeln, ist es aber auch möglich, die jeweils erste Menge MH eines jeweiligen Suchschritts komplett ("als ein Block") einem Datenkompressionsverfahren zu unterwerfen. Dies bietet sich vor allem dann an, wenn die Redundanzstrukturen nicht sehr unterschiedlich sind, oder wenn die damit verbundenen Geschwindigkeitsgewinne nicht vernachlässigt werden sollen.

Die Suche nach der optimalen ersten Menge MH, deren Speicherplatzbedarf (VMH) bzw. deren komprimierter Speicherplatzbedarf (VMH) - je nachdem, ob und ggf wie Kompressionsverfahren eingesetzt werden - kleiner oder gleich dem verfügbaren Speicherplatz (SV) auf dem Zieldatenspeicher (PSM) ist, muss nicht unbedingt in jeder Ausführungsform der Erfindung zu einem wirklichen Optimum führen. Gerade in solchen Fällen, in denen nach einigen Suchschritten der zusätzliche Gewinn an zu speichernder Information nur noch gering ist, kann es sinnvoll sein, die Suche nach Auffinden einer näherungsweise optimalen ersten Menge MH abzubrechen, und die Anzahl Z der Teildatenmengen in dieser näherungsweise optimalen ersten Menge MH als die größtmögliche Anzahl Z anzusehen, die auf dem verfügbaren Speicherplatz (SV) des zweiten Datenspeichers gespeichert werden können.

Zur Suche nach einer optimalen oder sub-optimalen ersten Menge MH ist ganz allgemein jedes binäre Suchverfahren geeignet. Solche Verfahren werden in beispielsweise in der Monographie von Donald E. Knuth, "The Art of Computer Programming", Volume 3, 2nd Edition; Addison Wesley; 1997, und hier insbesondere in der Section 6.2.1 ausführlich beschrieben und sind dem Fachmann durchaus geläufig. Die einzelnen binären Suchverfahren unterscheiden sich hauptsächlich durch die ihnen zugrundeliegende Teilungsregel, mit deren Hilfe die Menge M bei jedem Suchschritt in eine erste Menge MH und eine zweite Menge ML unterteilt wird.

Die einfachste Teilungsregel kann auch als Halbteilung bezeichnet werden, bei der im ersten Schritt die Menge M in zwei (näherungsweise) gleich große Teile unterteilt wird. Ist der Speicherplatzbedarf VMH der ggf komprimierten, teilweise komprimierten oder nicht komprimierten ersten Menge MH größer als der verfügbare Speicherplatz SV des zweiten Datenspeichers, dann muss die gesuchte erste Menge MH kleiner sein als die in diesem Schritt untersuchte erste Menge MH. In diesem Fall wird in einem nächsten Schritt der Suche die Menge MH ihrerseits in zwei (näherungsweise) gleich große Teile MH' bzw. ML' unterteilt.

Ist VMH gleich SV, dann ist die Suche beendet, und die Anzahl Z der Teildatenmengen in MH ist die gesuchte Zahl der speicherbaren Teildatenmengen.

Ist VMH kleiner als SV, dann könnte es noch eine Menge MH'' geben, in der eine größere Anzahl Z'' von Teildatenmengen enthalten ist als in MH. In diesem Fall wir die Menge ML in einem nächsten Schritt der Suche in zwei (näherungsweise) gleich große Teile MLH bzw. MLL unterteilt, und die neue, nun zu prüfende erste Menge MH'' ist die Vereinigungsmenge aus MH und MLH. Die neue zweite Menge ML'' wäre dann die Menge MLL.

Die Suche wird abgebrochen (STOP), wenn die größtmögliche Menge MH gefunden wurde, oder wenn eine weitere Suche keine praktisch bedeutsame Vergrößerung dieser Menge mehr verspricht.

Anstelle der (näherungsweisen) Halbteilung können in einigen Fällen andere Teilungsregeln vorteilhaft sein. Kennt man beispielsweise die Datenvolumina (dV1,...,dVN) der Teildatenmengen (M1,...,MN) vor oder nach einer Datenkompression, dann kann man dieses Wissen vorteilhaft zur Beschleunigung der Suche verwenden, beispielsweise in dem man bei der Teilung eine Extrapolation des zu erwartenden Speicherplatzbedarfs anhand der bekannten Datenvolumina (dV1,...,dVN) der Teildatenmengen (M1,...,MN) vornimmt. Sind alle Datenvolumina (dV1,...,dVN) näherungsweise gleich groß, dann kann zur Steuerung der Teilung auch die Anzahl der Teildatenmengen in den jeweiligen Mengen MH bzw. ML verwendet werden. Der Fachmann findet anhand der vorliegenden Beschreibung und anhand seines allgemeinen Fachwissens leicht weitere Varianten auf, die hier aus Platzgründen nicht alle beschrieben werden können.

In vielen Fällen werden die Teildatenmengen (M1,...,MN) aufgrund ihrer Priorität nicht strikt geordnet sein sondern nur einer Halbordnung unterliegen. Dies wird insbesondere dann auftreten, wenn die Prioritäten einiger Teildatenmengen gleich sind, und die hierdurch induzierte Halbordnung nicht beispielsweise durch eine manuelle, möglicherweise willkürliche Ordnung der Teildatenmengen durch den behandelnden Arzt ersetzt wird. Dann besteht eine Möglichkeit dieses Problem zu lösen darin, die Reihenfolge von Teildatenmengen mit gleicher Priorität so festzulegen, dass möglichst viele Teildatenmengen (M1,...,MZ) auf das zweite Datenspeicher übertragen und auf diesem gespeichert werden können.

Hierzu wäre eine adaptive Neufestlegung von anfänglich gleichen Prioritäten während der Suche erforderlich. Diese kann der Fachmann anhand der hier vorliegenden Schilderungen leicht in die Suche, z.B. in den Suchschritt s22 der Figur 2 integrieren. Dabei kann beispielsweise ein zufallsgesteuertes Verfahren oder ein auf der Kenntnis der Datenvolumina (dV1,...,dVN) der Teildatenmengen (M1,...,MN) basierendes Verfahren zur programmgesteuerten Neufestlegung von anfänglich gleichen Prioritäten verwendet werden.

Die einzelnen Teildatenmengen müssen nicht alle auf demselben ersten Datenspeicher (SM) eines einzigen Datenverarbeitungssystems DVS gespeichert sein. In einigen Anwendungsfällen können einzelne Teildatenmengen oder Gruppen von solchen auf unterschiedlichen ersten Speichern (SM) eines Datenverarbeitungssystems DVS oder mehrerer, unter Umständen räumlich getrennter und über eine Fernverbindung wie z.B. das Internet mit einander verbundener Datenverarbeitungssysteme DVS vorliegen. In anderen Fällen können die Teildatenmengen aber auch durch Aufteilung einer großen Datei, z.B. einer Bilddatei entstehen und daher auf demselben ersten Datenspeicher (SM) gespeichert sein.

## Patentansprüche

1. Verfahren zur digitalen Speicherung von in mindestens einem ersten Datenspeicher (SM) eines Datenverarbeitungssystem (DVS) vorhandenen Daten (dat) auf einem zweiten Datenspeicher (PSM) mit beschränktem verfügbaren Speicherplatz (SV), wobei
a) der zweite Datenspeicher (PSM) über eine Datenschnittstelle (DS) mit dem Datenverarbeitungssystem (DVS) in Verbindung steht,
b) die zu speichernde Menge (M) von Daten (dat) aus einer Mehrzahl N von Teildatenmengen (M1,...,MN), also beispielweise von Dateien oder Datensätzen, besteht oder in eine solche Mehrzahl N von Teildatenmengen unterteilt wird,
c) diese Teildatenmengen nach einer ihnen zugeordneten Priorität geordnet oder wenigstens halbgeordnet sind oder nach einer ihnen zugeordneten Priorität geordnet werden,
d) mit Hilfe einer von einem Prozessor (P) ausgeführten Suche, in deren Verlauf die zu speichernde Menge (M) von Daten (dat) bei jedem Suchschritt jeweils in eine erste Menge (MH) und in eine zweite Menge (ML) unterteilt wird, für die gilt, dass die Priorität keiner Teildatenmenge in der ersten Menge (MH) kleiner ist als die Priorität einer beliebigen Teildatenmenge in der zweiten Menge (ML),
e) mit Hilfe einer während dieser Suche bei jedem Schritt durchzuführenden Prüfung des jeweiligen Speicherplatzbedarfs (VMH) der jeweiligen ersten Menge (MH),
f) diejenige größte Anzahl Z von Teildatenmengen (M1,...,MZ) ermittelt wird, die auf dem verfügbaren Speicherplatz (SV) des zweiten Datenspeichers (PSM) gespeichert werden können, und für die gilt, dass die Priorität keiner auf diese Weise speicherbaren Teildatenmenge geringer ist als die Priorität einer beliebigen auf diese Weise nicht mehr speicherbaren Teildatenmenge, und wobei
g) die auf diese Weise ermittelten Z Teildatenmengen (M1,...,MZ) schließlich auf den zweiten Datenspeicher übertragen und auf diesem gespeichert werden.

2. Verfahren nach Anspruch 1, bei dem bei jedem Schritt der Suche vor der jeweiligen Prüfung des Speicherplatzbedarfs (VMH) zumindest ein Teil der Daten in der jeweiligen ersten Menge (MH) mit Hilfe eines Datenkompressionsverfahrens komprimiert werden, so dass der Speicherplatzbedarf der jeweils komprimierten Daten geprüft wird, und bei dem die auf diese Weise ermittelten Z Teildatenmengen (M1,...,MZ) schließlich in komprimierter Form auf den zweiten Datenspeicher übertragen und so auf diesem gespeichert werden.

3. Verfahren nach einem der vorhergehenden Ansprüche, bei dem eine binäre Suche durchgeführt wird, deren Teilungsregel die Datenvolumina (dV1,...,dVN) der Teildatenmengen (M1,...,MN) vor oder nach einer Datenkompression oder die Anzahl der Teildatenmengen berücksichtigt.

4. Verfahren nach einem der vorhergehenden Ansprüche, bei dem für dem Fall, dass die Teildatenmengen (M1,...,MN) aufgrund ihrer Priorität nicht strikt geordnet sind, die Reihenfolge von Teildatenmengen mit gleicher Priorität so festgelegt wird, dass möglichst viele Teildatenmengen (M1,...,MZ) auf den zweite Datenspeicher übertragen und auf diesem gespeichert werden können.
